# EUROPÄISCHE PATENTSCHRIFT

(11) **EP 0 551 613 B1**
(45) Veröffentlichungstag und Bekanntmachung des Hinweises auf die Patenterteilung: **31.01.1996**
(21) Anmeldenummer: 92120928.4
(22) Anmeldetag: 09.12.1992
(51) Int. Cl.: B65B 5/06, B65G 47/51

(54) **Vorrichtung zum Beschicken einer Verpackungsaufnahme, z.B. eines offenen Kartons**
Apparatus for loading a packaging container, e.g. an open carton
Machine pour remplir un récipient d'emballage, par exemple un carton ouvert

(30) Priorität: 17.01.1992 DE 4201080
(43) Veröffentlichungstag der Anmeldung: 21.07.1993
(73) Patentinhaber: OSTMA Maschinenbau GmbH, D-53909 Zülpich (DE)
(72) Erfinder: Odenthal, Heinz F., W-5352 Zülpich (DE)
(74) Vertreter: Andrejewski, Walter, Dr.

(56) Entgegenhaltungen:
- EP-A- 0 250 190
- WO-A-91/15415
- DE-A- 3 708 604
- FR-A- 2 524 869
- FR-A- 2 529 180
- US-A- 4 325 475

## Beschreibung

Die Erfindung betrifft eine Vorrichtung zum Beschicken einer in einer Beschickstation vorstehenden Verpackungsaufnahme, z. B. eines offenen Kartons, mit einer vorgegebenen Anzahl von gefüllten gleichen Verpackungen, insbsondere Beutelverpackungen, die in der Verpackungsaufnahme nebeneinander stehen, mit einem in einem geschlossenen Umlaufweg über Führungsrollen geführten Fachband mit in Transportrichtung gereihten Fächern für die Aufnahme der einzelnen Verpackungen, mit einem Zuführförderer, der in einer Übergabestation die einzelnen Verpackungen fortlaufend den einzelnen Fächern übergibt, und mit einem Förderer für die Verpackungsaufnahmen, der die leeren Verpackungsaufnahmen in die Beschickstation einführt und die gefüllten Verpackungsaufnahmen abführt, wobei der Umlaufweg für das Fachband eine gerade Umlaufstrecke aufweist, die von zwei umlenkenden Führungsrollen begrenzt ist und unter der oder neben der die Beschickstation angeordnet ist sowie der Umlaufweg durch in Umlaufrichtung vor der Beschickstation wegbildende Verstellung von Ausgleichs- und Führungsrollen gesteuert veränderbar sowie danach wieder rückstellbar ist, so daß ein Abschnitt des Fachbandes mit den in den Fächern befindlichen Verpackungen in der Beschickstation für eine Beschickpause anhaltbar ist und die in den Fächern befindlichen Verpackungen in der Beschickstation der jeweils in Ruhe vorstehenden Verpackungsaufnahme übergebbar sind. - Beutelverpackungen werden auch als flexible Folienverpackungen bezeichnet, die mit fließfähigem Gut gefüllt sind.

Bei einer bekannten Vorrichtung der eingangs beschriebenen Gattung (EP-A-0 250 190) ist das Fachband nicht kontinuierlich, sondern schrittweise angetrieben. Zum Betrieb dieser bekannten Vorrichtung gehören weitere Aggregate, nämlich eine elektromagnetische Bremse, die während der Beschickpause das Fachband an einer Stelle des Umlaufweges arretiert, sowie eine Einrichtung, welche einerseits eine passive wegzehrende bzw. wegbildende Bewegung von zwei Führungsrollen ermöglicht. Diese Einrichtung arbeitet nur mit aktivierter Bremse und außerdem gegen die Federkraft von Kettenspannern. Das alles ist konstruktiv aufwendig und bedingt auch eine verhältnismäßig große Trägheit des Systems, die durch den Antrieb überwunden werden muß.

Im Rahmen anderer bekannter Maßnahmen kommen die Verpackungen hintereinander flach liegend auf einem horizontalen Förderer an (DE-A-34 06 858), auf dem sie auch schindelartig angeordnet sein können. Ein bogenförmiger Förderstreckenabschnitt schließt an, dem ein Halteförderer zugeordnet ist. Die Beschickstation befindet sich unter diesen Förderern. Die einzelnen Verpackungen werden eine nach der anderen in die Verpackungsaufnahmen eingeführt. Diese Maßnahmen sind in kinematischer Hinsicht verhältnismäßig aufwendig. Auch ist nicht auszuschließen, daß sich die einzelnen Verpackungen, die auf dem horizontalen Förderer ankommen oder auf dem bogenförmigen Förderer fortgeführt werden, gegeneinander verschieben, woraus Störungen resultieren können.

Der Erfindung liegt die Aufgabe zugrunde, eine gattungsgemäße Vorrichtung im Hinblick auf Konstruktion und steuerungstechnische Maßnahmen zu vereinfachen.

Diese Aufgabe wird dadurch gelöst, daß das Fachband kontinuierlich angetrieben ist, daß die beiden die gerade Umlaufstrecke begrenzenden Führungsrollen über ein Gestänge vereinigt und in der Beschickpause gemeinsam in Richtung der geraden Umlaufstrecke verstellbar sind, und daß außerdem eine Ausgleichsrolle verstellbar ist.

Erfindungsgemäß werden bei der arbeitenden Vorrichtung die Fächer des Fachbandes fortlaufend und mit konstanter Geschwindigkeit des Fachbandes durch die Übergabestation geführt. Andererseits wird taktweise ein Abschnitt des Fachbandes mit den darin befindlichen Verpackungen, die in die Verpackungsaufnahme einzuführen sind, in der Beschickstation festgehalten. Folglich würde sich in Umlaufrichtung des Fachbandes vor der Beschickstation eine Fachbandlänge gleichsam als Stau ansammeln. An der anderen Seite der Beschickstation würde eine Fehllänge des Fachbandes entstehen. Die Erfindung geht von der Erkenntnis aus, daß die daraus resultierenden Zwänge trotz der vorgegebenen Länge des endlos umlaufenden Fachbandes dadurch beseitigt werden können, daß der Umlaufweg nach Maßgabe der Beschickpause und der daraus resultierenden Abschnittslänge des durch die Übergabestation geführten Fachbandes durch in Umlaufrichtung vor der Beschickstation wegbildende Verstellung von Führungsrollen veränderbar sowie danach wieder rückstellbar ist. Wegbildend meint umlaufwegbildend in bezug auf das endlos geführte Fachband mit vorgegebener definierter Länge. Stau und Fehllänge des Fachbandes werden kompensiert. Durch die beschriebenen Maßnahmen ist es möglich, daß das Fachband im Bereich der Beschickstation gleichsam anhält, im Bereich der Übergabestation jedoch fortlaufend weiter mit Verpackungen, die in eine nächste Verpackungsaufnahme eingefüllt werden müssen, zu versehen. - Die zur Verwirklichung der Lehre der Erfindung erforderlichen kinematischen Maßnahmen und Verstellmaßnahmen lassen sich mit den Hilfsmitteln der modernen Antriebs- und Steuerungstechnik unschwer verwirklichen.

Im folgenden wird die Erfindung anhand einer lediglich ein Ausführungsbeispiel darstellenden Zeichnung ausführlicher erläutert. Es zeigen in schematischer Darstellung
- Fig. 1: die Seitenansicht einer erfindungsgemäßen Vorrichtung mit in einer Beschickstation vorstehender leerer Verpackungsaufnahme,
- Fig. 2: den Gegenstand nach Fig. 1 in einer anderen Funktionsstellung, die Verpackungsaufnahme mit den zugeordneten Kartons gefüllt und
- Fig. 3: eine andere Ausführungsform des Gegenstandes der Fig. 1 und 2.

Die in den Figuren dargestellte Vorrichtung dient zum Beschicken einer Verpackungsaufnahme 1, z. B. eines offenen Kartons, der in einer Beschickstation 2 vorsteht. Die Verpackungsaufnahme 1 wird mit einer vorgegebenen Anzahl von gefüllten gleichen Verpackungen 3 beschickt. Es mag sich insbesondere um Beutelverpackungen und Folienbeutelverpackungen handeln. Diese Verpackungen 3 stehen nach der Beschickung in der Verpackungsaufnahme 1 senkrecht nebeneinander.

Zu der Vorrichtung gehört ein in einem geschlossenen Umlaufweg über Führungsrollen geführtes Fachband 4 mit in Transportrichtung gereihten Fächern 5 für die Aufnahme der einzelnen Verpackungen 3. Das Fachband 4 hat eine definierte Länge. Man erkennt fernerhin einen Zuführförderer 6, der in einer Übergabestation 7 die einzelnen Verpackungen 3 den einzelnen Fächern 5 des Fachbandes 4 übergibt. Außerdem ist ein Förderer 8 für die Verpackungsaufnahme 1 vorgesehen, der die leeren Verpackungsaufnahmen 1 in die Beschickstation 2 einführt und die gefüllten Verpackungsaufnahmen 1 abführt.

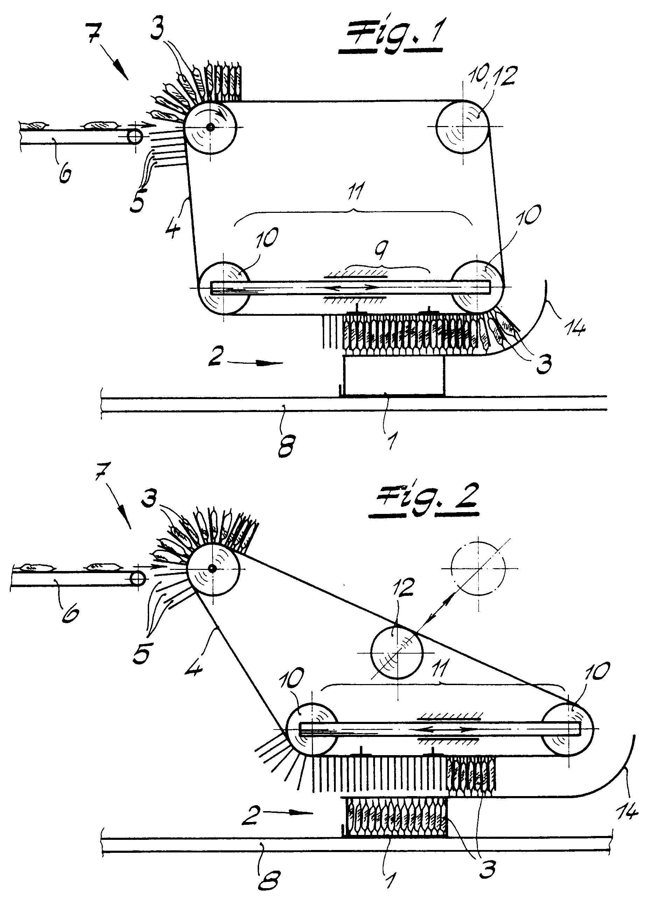

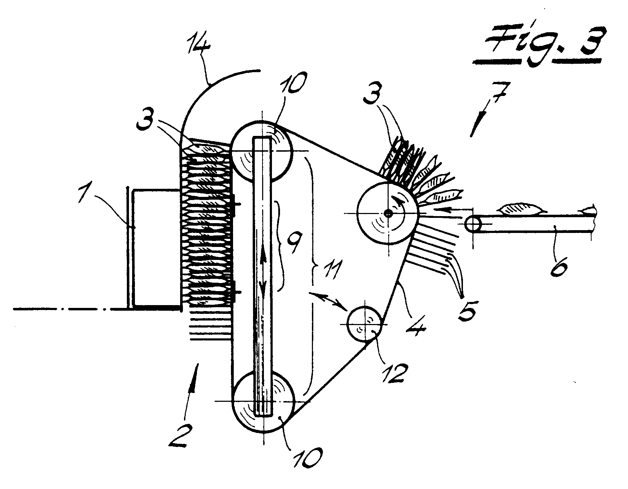

Bei den dargestellten Vorrichtungen ist das Fachband 4 kontinuierlich angetrieben und fortlaufend durch die Übergabestation 7 geführt. Andererseits ist ein Abschnitt 9 des Fachbandes 4 mit den in den Fächern 5 befindlichen Verpackungen 3 der Beschickstation 2 für eine Beschickpause festsetzbar. Das geschieht dann, wenn sich die zugeordnete Anzahl der Verpackungen 3 genau über der Verpackungsaufnahme 1 in der Beschickstation 2 befindet. Dazu wird auf die Fig. 1 verwiesen. Die in den Fächern 5 befindlichen Verpackungen 3 können in der Beschickstation 2 der jeweils in Ruhe vorstehenden Verpackungsaufnahme 1 übergeben werden. In der Fig. 2 ist dies geschehen. Man entnimmt aus einer vergleichenden Betrachtung der Fig. 1 und 2, daß der Umlaufweg des Fachbandes 4 nach Maßgabe der Beschickpause und der daraus resultierenden Abschnittslänge des durch die Übergabestation 7 geführten Fachbandes 4 durch in Umlaufrichtung vor der Beschickstation 2 wegbildende Verstellung von Führungsrollen 10 veränderbar sowie danach rückstellbar ist. In der Fig. 2 erkennt man die Endposition dieser Verstellung, die Rückstellung schließt an. Inzwischen konnten in der Übergabestation 7 weitere Verpackungen 3 in die einzelnen Fächer 5 des Fachbandes 4 eingeführt werden.

In den Fig. 1 bis 3 ist die Anordnung so getroffen, daß der Umlaufweg für das Fachband 4 eine gerade Umlaufstrecke 11 aufweist. Diese ist von zwei umlenkenden Führungsrollen 10 begrenzt. Unter der geraden Umlaufstrecke 11 befindet sich in den Fig. 1 und 2 die Beschickstation 2 für eine leer vorstehende Verpackungsaufnahme 1. In der Fig. 3 befindet sich die Beschickstation 2 für eine leer vorstehende Verpackungsaufnahme 1 neben dieser geraden Umlaufstrecke 11. Die beiden die gerade Umlaufstrecke 11 begrenzenden Führungsrollen 10 sind über ein Gestänge vereinigt. Sie sind in der Beschickpause gemeinsam wegbildend im Sinne der obigen Erläuterungen verstellbar. Außerdem ist eine Ausgleichsrolle 12 verstellbar, die im übrigen in der Funktionsstellung, die in Fig. 1 dargestellt wurde, auch als Umlenkrolle funktioniert.

Bei den dargestellten Vorrichtungen werden die Fächer 5 des Fachbandes 4 fortlaufend und mit konstanter Geschwindigkeit des Fachbandes 4 durch die Übergabestation 7 geführt. Andererseits wird taktweise ein Abschnitt des Förderbandes 4 mit den darin befindlichen Verpackungen 3, die in die Verpackungsaufnahme 1 einzuführen sind, in der Beschickstation 2 festgehalten. Die beschriebene wegbildende Verstellung verhindert, daß sich in Umlaufrichtung des Fachbandes 4 vor der Beschickstation 2 Fachbandlänge ansammelt, die auf der anderen Seite der Beschickstation 2 fehlt. - Es versteht sich, daß über geeignete Führungsbleche 14 oder ähnliche Einrichtungen verhindert wird, daß die Verpackungen 3, die sich in den Fächern 5 des Fachbandes 4 befinden, aus diesen Fächern 5 herausgleiten können, wo dieses aufgrund der Schwerkraft möglich wäre. Es versteht sich fernerhin, daß zum Zwecke der Beschickung einer in der Beschickstation 2 vorstehenden Verpackungsaufnahme 1 diese Führungsbleche 14 unter demjenigen Abschnitt des Fachbandes 4 weggezogen werden, in dem sich die Verpackungen 3 befinden, die mit vorgegebener Anzahl in die Verpackungsaufnahme 1 eingeführt werden sollen. Bei der Ausführungsform nach Fig. 3 erfolgt die Übergabe aus den Fächern 5 des Fachbandes 4 in die Verpackungsaufnahme 1 nicht durch Schwerkraft, sondern durch entsprechendes Ausschieben.

## Patentansprüche

1. Vorrichtung zum Beschicken einer in einer Beschickstation (2) vorstehenden Verpackungsaufnahme (1), z. B. eines offenen Kartons, mit einer vorgegebenen Anzahl von gefüllten gleichen Verpackungen (3), insbesondere Beutelverpackungen, die in der Verpackungsaufnahme (1) nebeneinander stehen, mit einem in einem geschlossenen Umlaufweg über Führungsrollen (10) geführten Fachband (4) mit in Transportrichtung gereihten Fächern (5) für die Aufnahme der einzelnen Verpackungen (3), mit einem Zuführförderer (6), der in einer Übergabestation (7) die einzelnen Verpackungen (3) fortlaufend den einzelnen Fächern (5) übergibt, und mit einem Förderer (8) für die Verpackungsaufnahmen (1), der die leeren Verpackungsaufnahmen (1) in die Beschickstation (2) einführt und die gefüllten Verpackungsaufnahmen (1) abführt, wobei der Umlaufweg für das Fachband (4) eine gerade Umlaufstrecke (11) aufweist, die von zwei umlenkenden Führungsrollen (10) begrenzt ist und unter der oder neben der die Beschickstation (2) angeordnet ist sowie der Umlaufweg durch in Umlaufrichtung vor der Beschickstation (2) wegbildende Verstellung von Ausgleichs- und Führungsrollen (10, 12) gesteuert veränderbar sowie danach wieder rückstellbar ist, so daß ein Abschnitt des Fachbandes (4) mit den in den Fächern (5) befindlichen Verpackungen (3) in der Beschickstation (2) für eine Beschickpause anhaltbar ist und die in den Fächern (5) befindlichen Verpackungen (3) in der Beschickstation (2) der jeweils in Ruhe vorstehenden Verpackungsaufnahme (1) übergebbar sind, **dadurch gekennzeichnet**, daß das Fachband (4) kontinuierlich angetrieben ist, daß die beiden die gerade Umlaufstrecke (11) begrenzenden Führungsrollen (10) über ein Gestänge vereinigt und in der Beschickpause gemeinsam in Richtung der geraden Umlaufstrecke (11) verstellbar sind und daß außerdem eine Ausgleichsrolle (12) verstellbar ist.

## Claims

1. An apparatus for loading a package receiver (1), e.g. an open carton, which is present in a loading station (2), with a predetermined number of filled identical packages (3), particularly bag packages, which are disposed upright side by side in the package receiver (1), having a compartmentalised belt (4) which is guided in a closed circulating path over guide rollers (10) and which has compartments (5) arranged in series in the direction of conveying for receiving the individual packages (3), having a feeder conveyor (6) which continuously transfers the individual packages (3) to the individual compartments (5) in a transfer station (7), and having a conveyor (8) for the package receivers (1) which introduces the empty package receivers (1) into the loading station (2) and conveys the filled package receivers (1) away, wherein the circulating path for the compartmentalised belt (6) has a straight circulation section (11) which is delimited by two deflecting guide rollers (10) and is disposed under or near the loading station (2), and wherein the circulating path can be variably controlled and can be reset thereafter by the adjustment of compensating- and guide rollers (10, 12) to form a path in front of the loading station (2) in the direction of circulation so that a section of the compartmentalised belt (4) with the packages (3) situated in the compartments (5) can be stopped in the loading station (2) for a loading interval and the packages (3) situated in the compartments (5) can be transferred in the loading station (2) into the package receiver (1) which is at rest each time, characterised in that the compartmentalised belt (4) is driven continuously, that the two guide rollers (10) delimiting the straight circulation section (11) are connected via a rod assembly and can be jointly adjusted in the direction of the straight circulation section (11) within the loading interval, and that a compensating roller (12) is adjustable in addition.

## Revendications

1. Dispositif pour charger dans un réceptacle à emballages (1), qui est présent dans un poste de chargement (2), par exemple un carton ouvert, un nombre prédéterminé d'emballages identiques remplis (3), notamment des emballages en forme de sachets, qui sont disposés côte-à-côte dans le réceptacle à emballages (1), une bande à casiers (4) guidée selon un trajet de circulation fermé autour de rouleaux de guidage (10) et comportant des casiers (5) rangés en série dans la direction de transport et servant à recevoir les différents emballages (3), un convoyeur d'amenée (6), qui, dans un poste de transfert (7), transfère en permanence les différents emballages (3) dans les différents casiers (5), et un convoyeur (8) pour les réceptacles à emballages (1), qui introduit les réceptacles à emballages vides (1) dans le poste de chargement (2) et évacue les réceptacles à emballages (1) remplis, et dans lequel le trajet de circulation pour la bande à casiers (4) possède une section rectiligne de circulation (11), qui est limitée par deux rouleaux de guidage (10) réalisant un renvoi et au-dessous ou à côté de laquelle est disposé le poste de chargement (2), et le trajet de circulation peut être modifié et ensuite être à nouveau ramené à l'état initial au moyen d'un déplacement de rouleaux de compensation et de guidage (10,12), qui établit le trajet dans la direction de circulation en amont du poste de chargement (2), de sorte qu'une partie de la bande à casiers (4), dans les casiers (5) de laquelle sont situés les emballages (3), peut être arrêtée dans le poste de chargement (2) pour une pause de chargement et que les emballages (3) situés dans les casiers (5) peuvent être transférés dans le poste de chargement (2) du réceptacle à emballages (1) qui est situé respectivement en avant dans la position de repos, caractérisé en ce que la bande à casiers (4) est entraînée continûment, que les deux rouleaux de guidage (10), qui délimitent la section rectiligne de circulation (11), sont réunis par l'intermédiaire d'une tringlerie et, pendant la pause de chargement, peuvent être déplacés en commun en direction de la section rectiligne de circulation (11) et qu'en outre un rouleau de compensation (12) est déplaçable.
